# EUROPEAN PATENT SPECIFICATION

(11) **EP 0 919 447 B1**
(45) Date of publication and mention of the grant of the patent: **22.10.2003**
(21) Application number: 98309589.4
(22) Date of filing: 24.11.1998
(51) Int. Cl.: B61F 5/38, B61F 3/16, B61C 15/14

(54) **Rail vehicle drive arrangement**
Antriebsanordnung für ein Schienenfahrzeug
Système d'entrainement d'un véhicule sur rails

(30) Priority: 27.11.1997 GB 9724964
(43) Date of publication of application: 02.06.1999
(73) Proprietor: Gabbidon, Willitz Decartered, Derby DE22 3SX (GB); Guy, Wilton Francis, Derby DE22 3SX (GB); Howe, Michael, Derby DE22 3SX (GB)
(72) Inventor: Gibson, David Ronald, Derby DE22 3SX (GB)
(74) Representative: Swindell & Pearson

(56) References cited:
- EP-A- 0 590 234
- DE-A- 4 231 346
- DE-C- 4 114 860
- DE-C- 4 237 764

## Description

This invention concerns a rail vehicle drive arrangement, and particularly but not exclusively such an arrangement for an electrically driven train or tram.

For the avoidance of doubt, the term "rail vehicle" when used in the specification is to be understood as denoting a vehicle which runs on a pair of spaced rails. Such vehicles include trains and trams.

When rail vehicles travel along curved track, the wheels on either side of the vehicle must travel at different speeds. Accordingly, with driven pairs of wheels, slippage of at least one of the wheels generally occurs to compensate for the different speeds. This can result in wear of the track and/or wheels, and also noise. This is particularly problematic with trams which often encounter relatively sharp bends in towns and cities. Bogies are used to reduce this problem but this increases the weight of the vehicles, the number of wheels required on each vehicle, the load borne by the track, and hence the strength of track required.

DE-A1-4114860 discloses a rail drive arrangement comprising means for determining the alignment of the track in front of a vehicle, means for measuring the speeds of the wheels, and means for orienting the wheels in response to the determination of the track alignment.

According to the present invention there is provided a rail vehicle drive arrangement, the arrangement comprising drive means for independently driving a wheel on each side of a rail vehicle alignment sensing means for determining the alignment of the track in front of the vehicle relative to a longitudinal axis of the vehicle, and speed control means for controlling the wheel speed on each side of the vehicle relative to the other side, characterised in that the speed control means is operable in response to a signal from the alignment sensing means to control the drive means said drive means applying, in response to the determined alignment of the track, a first speed to one of said wheels and a second speed to the other of said wheels on the other side of the vehicle, such that each of said two wheels rotates at a required relative speed for the vehicle to move with no slippage of either wheel being required.

The wheel speed control means preferably comprises a microcontroller.

The alignment sensing means preferably comprises a position sensor. The position sensor is preferably connected to the microcontroller. The position sensor may be an electromagnetic wave signal sensor. The electromagnetic signal sensor may be an optical imaging device. Alternatively, the sensor may be an infrared sensor. The position sensor may as a further alternative be a magnetic proximity detector. As a still further alternative the sensor may comprise an ultrasonic detector. A plurality of sensors may be provided operable simultaneously, and desirably these comprise more than one type of sensor.

Desirably, the position sensor detects the alignment of the track a set distance ahead of the wheel. The distance may be determined by the time required to instigate a change in the wheel speed in response to a detected track variation.

Alternatively, the alignment sensing means may comprise track-side signal apparatus from which track information is sent to the microcontroller.

The wheel speed control means preferably comprises a frequency inverter. Preferably an electric motor and inverter is provided for each wheel. The speed of each wheel is preferably determined by the frequency of the alternating current supplied from the respective inverter. The speed of the wheel is preferably proportional to the current frequency. A three phase current supply is desirably provided to the motor. A current sensor may be provided between the inverter and the motor to thereby monitor the load power supplied to the motor.

The wheel speed control means may further comprise means for determining the alignment of each driven wheel relative to the track. The microcontroller is preferably programmed to compensate for any incorrect alignment of a wheel, caused for instance by differences in the diameters of respective wheels.

The arrangement preferably comprises means for retaining opposite wheels parallel to each other. Said means may comprise a linkage extending between the wheels.

The motor is preferably a synchronous motor. The synchronous motor may be a permanent magnet synchronous motor.

Preferably a plurality of driven wheels are provided on each side of the vehicle, with a separate frequency inverter and electric motor for each wheel.

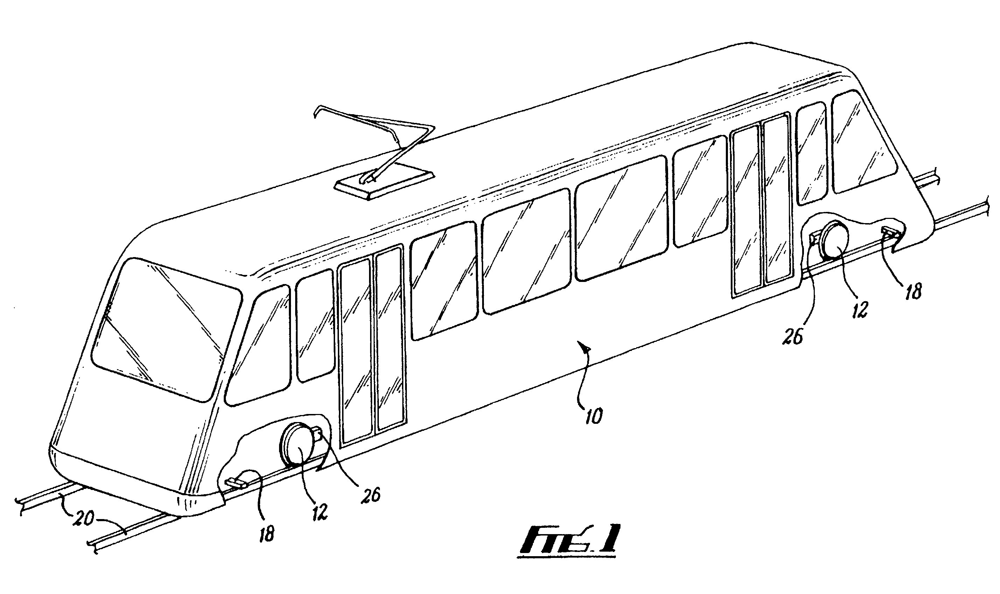

An embodiment of the present invention will now be described by way of example only with reference to the accompanying drawings, in which:-
Fig. 1 is a diagrammatic perspective view of a rail vehicle incorporating a vehicle drive arrangement according to the invention; and

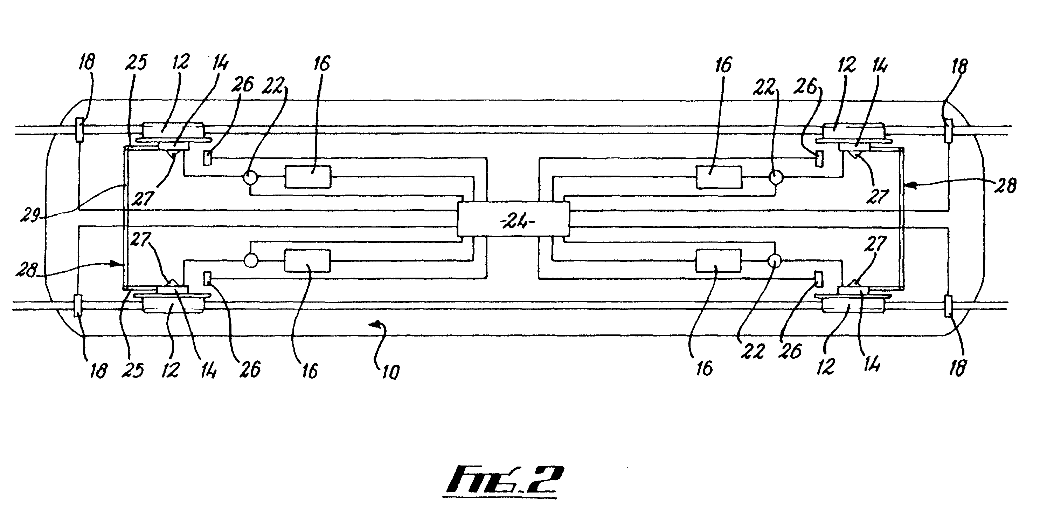

Fig. 2 is a diagrammatic view from beneath of the vehicle of Fig. 1.

The drawings diagrammatically show a rail vehicle 10 with four driving wheels 12 running on a track 20. Each wheel 12 is provided with a synchronous motor 14 and a frequency inverter 16. Each wheel is mounted on pivots 27 and an associated stabiliser 28 connected to the wheel 12 on the other side of the vehicle, the stabiliser 28 extending from the vehicle underframe. The stabiliser 28 comprises a respective bar 25 extending from each pivot 27 towards the nearest end of the vehicle 10. The free end of the bars 25 for opposite wheels 12 are interconnected via pivotal mountings to a cross bar 29. The stabiliser 28 ensures that opposite wheels 12 remain parallel to each other. Each inverter 16 is connected to a microcontroller 24 via a current sensor 22 which monitors the load power supply to each respective motor 14.

A pair of sensors 18 are provided at the front of the vehicle 10 to detect the alignment of the respective rails of the track 20 in front of the vehicle 10. The sensors 18 are also connected to the microcontroller 24. Further sensors 26 are located, one adjacent each wheel 12. The sensors 26 detect the alignment of the respective wheel 12 relative to the track 20 and send a corresponding signal to the microcontroller 24.

In use, the sensors 18 determine the alignment of the track 20 in front of the vehicle 10. When the vehicle 10 passes over the track 20 for which the alignment thereof has been determined, the relative speeds of each of the wheels 12 are arranged such that each wheel 12 turns at a required relative speed for no slippage of any wheel to be required. The further sensors 26 detect the absolute angle of the wheel to the track, and via the microcontroller 24 provide a re-set signal to correct long term errors such as wheel diameter changes due to wear. Accordingly, the relative wheel speeds can be further adjusted by the microcontroller 24 to compensate for this. Signals from the further sensors 26 to the microcontroller 24 on a regular basis permit updating in this respect.

The speed of each wheel 12 is proportional to the frequency of the three phase alternating current supplied to the respective motor 14 from the respective inverter 16 as directed by the microcontroller 24. The microcontroller 24 controls each motor 14 independently through the respective inverter 16 such that current of a different frequency can be supplied from each inverter 16. The inverters 16 are supplied with direct current, either from an external source, batteries or internally generated.

There is thus provided an arrangement whereby each wheel can be driven at a correct relative speed such that no slippage is required for a vehicle to move over curved track. This provides for less wear to the wheels and track, and also less noise. This will also provide for a more efficient operation of the train. With this system, it may be possible to alleviate the requirement for bogies, particularly for instance on a tram. Therefore it will be possible to use less wheels and hence have a lower weight and lighter track requirement than is presently the case.

Many different types of sensors could be used to detect the track alignment and also the wheel alignment. For example the sensors may comprise an electromagnetic wave signal sensor operating for instance by microwave, radar, or infrared. Alternatively the sensors may comprise an optical imaging device, an ultrasonic detector, or a magnetic proximity detector. More than one type of sensor may be provided operating simultaneously to allow for any misreadings by a one of the sensors. The track alignment detector will determine the track alignment sufficiently far in front of the train to permit wheels speeds to be changed in time for detected variations in track alignment.

Whilst the above described example shows a four wheeled rail vehicle, the invention is usable in a wide range of rail vehicles with a wide variety of drive arrangements. Different detection means can be used and for instance signals could be provided by track side apparatus to indicate to the microcontroller the track alignment for a following section. Different wheel motors could be provided other than those illustrated above. With different motors, different speed control means may be required.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A rail vehicle drive arrangement, the arrangement comprising drive means (14) for independently driving a wheel (12) on each side of a rail vehicle alignment sensing means (18) for determining the alignment of the track (20) in front of the vehicle (10) relative to a longitudinal axis of the vehicle, and speed control means (24) for controlling the wheel speed on each side of the vehicle (10) relative to the other side, **characterised in that** the speed control means (24) is operable in response to a signal from the alignment sensing means (18) to control the drive means (14) said drive means (14) applying, in response to the determined alignment of the track (20), a first speed to one of said wheels and a second speed to the other of said wheels on the other side of the vehicle, such that each of said two wheels (12) rotates at a required relative speed for the vehicle (10) to move with no slippage of either wheel (12) being required.

2. A drive arrangement according to claim 1 **characterised in that** the wheel speed control means comprises a microcontroller (24).

3. A drive arrangement according to claims 1 or 2 **characterised in that** the alignment sensing means comprises a position sensor (18).

4. A drive arrangement according to claim 3 **characterised in that** the position sensor (18) is connected to the microcontroller (24).

5. A drive arrangement according to claims 3 or 4 **characterised in that** the position sensor (18) is an electromagnetic wave signal sensor.

6. A drive arrangement according to claim 5 **characterised in that** the electromagnetic signal sensor (18) is an optical imaging device.

7. A drive arrangement according to claims 3 or 4 **characterised in that** the position sensor (18) is an infrared sensor.

8. A drive arrangement according to claims 3 or 4 **characterised in that** the position sensor (18) is a magnetic proximity detector.

9. A drive arrangement according to claims 3 or 4 **characterised in that** the position sensor (18) comprises an ultrasonic detector.

10. A drive arrangement according to any of claims 3 to 9 **characterised in that** a plurality of position sensors (18) are provided operable simultaneously.

11. A drive arrangement according to claim 10 **characterised in that** the sensors (18) comprise more than one type of sensor.

12. A drive arrangement according to any of claims 3 to 11 **characterised in that** the position sensor (18) detects the alignment of the track (20) a set distance ahead of the wheel (12).

13. A drive arrangement according to claim 12 **characterised in that** the distance is determined by the time required to instigate a change in the wheel speed in response to a detected track variation.

14. A drive arrangement according to claims 1 or 2 **characterised in that** the alignment sensing means (18) comprises track-side signal apparatus from which track information is sent to the microcontroller.

15. A drive arrangement according to any of the preceding claims **characterised in that** the wheel speed control means comprises a frequency inverter (16).

16. A drive arrangement according to claim 15 **characterised in that** the speed of the wheel (12) is proportional to the current frequency.

17. A drive arrangement according to claims 15 or 16 **characterised in that** an electric motor (14) and inverter (16) is provided for each wheel (12).

18. A drive arrangement according to claim 17 **characterised in that** the speed of each wheel (12) is determined by the frequency of the alternating current supplied from the respective inverter (16).

19. A drive arrangement according to claims 17 or 18 **characterised in that** a three phase current supply is provided to the motor (14).

20. A drive arrangement according to any of claims 17 to 19 **characterised in that** a current sensor is provided between the inverter and the motor to thereby monitor the load power supplied to the motor.

21. A drive arrangement according to any of the preceding claims **characterised in that** the wheel speed control means further comprises means (26) for determining the alignment of each driven wheel (12) relative to the track (20).

22. A drive arrangement according to claim 21 when dependent on claim 2, or any of claims 3 to 20 when dependent on claim 2, **characterised in that** the microcontroller (24) is programmed to compensate for any incorrect alignment of a wheel (12), caused for instance by differences in the diameters of respective wheels (12).

23. A drive arrangement according to any of the preceding claims **characterised in that** the arrangement comprises means (28) for retaining opposite wheels (12) parallel to each other.

24. A drive arrangement according to claim 23 **characterised in that** said means comprises a linkage (28) extending between the wheels (12).

25. A drive arrangement according to any of the preceding claims **characterised in that** the drive means comprises a synchronous motor (14).

26. A drive arrangement according to claim 25 **characterised in that** the synchronous motor is a permanent magnet synchronous motor (14).

27. A drive arrangement according to claim 17 or any of claims 18 to 26 when dependent on claim 17, **characterised in that** a plurality of driven wheels (12) are provided on each side of the vehicle (10), with a separate frequency inverter (16) and electric motor (14) for each wheel (12).

## Patentansprüche

1. Schienenfahrzeug-Antriebsanordnung mit einem Antriebsmittel (14) zum unabhängigen Antreiben eines Rads (12) auf jeder Seite eines Schienenfahrzeugs; einem Ausrichtungs-Erfassungsmittel (18) zum Bestimmen der Ausrichtung der Spur (20) vor dem Fahrzeug (10) bezüglich einer Längsachse des Fahrzeugs; und einem Geschwindigkeits-Steuerungsmittel (24) zum Steuern der Radgeschwindigkeit auf jeder Seite des Fahrzeugs (10) bezüglich der anderen Seite, **dadurch gekennzeichnet, dass** das Geschwindigkeits-Steuerungsmittel (24) als Reaktion auf ein Signal von dem Ausrichtungs-Erfassungsmittel (18) betätigbar ist, um das Antriebsmittel (14) zu steuern, wobei das Antriebsmittel (14) als Reaktion auf die vorbestimmte Ausrichtung der Spur (20) eine erste Geschwindigkeit einem der Räder verleiht und eine zweite ' Geschwindigkeit dem anderen der Räder auf der anderen Seite des Fahrzeugs verleiht, so dass jedes der beiden Räder (12) sich mit einer erforderlichen Relativgeschwindigkeit dreht, damit sich das Fahrzeug (10) ohne Rutschen der beiden erforderlichen Räder (12) bewegt.

2. Antriebsanordnung nach Anspruch 1, **dadurch gekennzeichnet, dass** das Radgeschwindigkeits-Steuerungsmittel eine Mikro-Steuerungsvorrichtung (24) aufweist.

3. Antriebsanordnung nach Anspruch 1 oder 2, **dadurch gekennzeichnet, dass** das Ausrichtungs-Erfassungsmittel einen Positionssensor (18) aufweist.

4. Antriebsanordnung nach Anspruch 3, **dadurch gekennzeichnet, dass** der Positionssensor (18) mit der Mikro-Steuerungsvorrichtung (24) verbunden ist.

5. Antriebsanordnung nach Anspruch 3 oder 4, **dadurch gekennzeichnet, dass** der Positionssensor (18) ein elektromagnetischer Wellensignal-Sensor ist.

6. Antriebsanordnung nach Anspruch 5, **dadurch gekennzeichnet, dass** der elektromagnetische Signalsensor (18) eine optische Abbildungsvorrichtung ist.

7. Antriebsanordnung nach Anspruch 3 oder 4, **dadurch gekennzeichnet, dass** der Positionssensor (18) ein Infrarotsensor ist.

8. Antriebsanordnung nach Anspruch 3 oder 4, **dadurch gekennzeichnet, dass** der Positionssensor (18) ein magnetischer Näherungsdetektor ist.

9. Antriebsanordnung nach Anspruch 3 oder 4, **dadurch gekennzeichnet, dass** der Positionssensor (18) einen Ultraschalldetektor aufweist.

10. Antriebsanordnung nach einem der Ansprüche 3 bis 9, **dadurch gekennzeichnet, dass** eine Vielzahl von Positionssensoren (18) gleichzeitig betätigbar vorgesehen sind.

11. Antriebsanordnung nach Anspruch 10, **dadurch gekennzeichnet, dass** die Sensoren (18) mehr als eine Art von Sensor aufweisen.

12. Antriebsanordnung nach einem der Ansprüche 3 bis 11, **dadurch gekennzeichnet, dass** der Positionssensor (18) die Ausrichtung der Spur (20) in einer eingestellten Entfernung vor dem Rad (12) erfasst.

13. Antriebsanordnung nach Anspruch 12, **dadurch gekennzeichnet, dass** die Entfernung durch die Zeit bestimmt wird, die benötigt wird, um eine Änderung der Radgeschwindigkeit als Reaktion auf eine erfasste Spurveränderung zu veranlassen.

14. Antriebsanordnung nach Anspruch 1 oder 2, **dadurch gekennzeichnet, dass** das Ausrichtungs-Erfassungsmittel (18) eine schienenseitige Signalvorrichtung aufweist, von der aus Spurinformation zu der Mikro-Steuerungsvorrichtung gesendet wird.

15. Antriebsanordnung nach einem der vorhergehenden Ansprüche, **dadurch gekennzeichnet, dass** das Radgeschwindigkeit-Steuerungsmittel einen Frequenzinverter (16) aufweist.

16. Antriebsanordnung nach Anspruch 15, **dadurch gekennzeichnet, dass** die Geschwindigkeit des Rads (12) proportional zu der Stromfrequenz ist.

17. Antriebsanordnung nach Anspruch 15 oder 16, **dadurch gekennzeichnet, dass** ein Elektromotor (14) und ein Inverter (16) für jedes Rad (12) vorgesehen ist.

18. Antriebsanordnung nach Anspruch 17, **dadurch gekennzeichnet, dass** die Geschwindigkeit jedes Rads (12) durch die Frequenz des von dem jeweiligen Inverter (16) zugeführten Wechselstroms bestimmt wird.

19. Antriebsanordnung nach Anspruch 17 oder 18, **dadurch gekennzeichnet, dass** für den Motor (14) eine Dreiphasen-Stromversorgung vorgesehen ist.

20. Antriebsanordnung nach einem der Ansprüche 17 bis 19, **dadurch gekennzeichnet, dass** ein Stromsensor zwischen dem Inverter und dem Motor vorgesehen ist, um dadurch die dem Motor zugeführte Lastleistung zu überwachen.

21. Antriebsanordnung nach einem der vorhergehenden Ansprüche, **dadurch gekennzeichnet, dass** das Radgeschwindigkeit-Steuerungsmittel außerdem ein Mittel (26) aufweist zum Bestimmen der Ausrichtung jedes angetriebenen Rads (12) bezüglich der Spur (20).

22. Antriebsanordnung nach Anspruch 21 bei Abhängigkeit von Anspruch 2 oder irgendeinem der Ansprüche 3 bis 20, wenn Abhängigkeit von Anspruch 2 vorliegt, **dadurch gekennzeichnet, dass** die Mikro-Steuerungsvorrichtung (24) dafür programmiert ist, um jegliche Fehlausrichtung eines Rads (12) zu kompensieren, die z.B. durch Differenzen der Durchmesser der jeweiligen Räder (12) verursacht wird.

23. Antriebsanordnung nach einem der vorhergesehenen Ansprüche, **dadurch gekennzeichnet, dass** die Anordnung ein Mittel (28) aufweist zum Halten gegenüberliegender Räder (12) parallel zueinander.

24. Antriebsanordnung nach Anspruch 23, **dadurch gekennzeichnet, dass** das Mittel ein sich zwischen den Rädern (12) erstreckendes Gestänge (28) aufweist.

25. Antriebsanordnung nach einem der vorhergehenden Ansprüche, **dadurch gekennzeichnet, dass** das Antriebsmittel einen Synchronmotor (14) aufweist.

26. Antriebsanordnung nach Anspruch 25, **dadurch gekennzeichnet, dass** der Synchronmotor ein Permanentmagnet-Synchronmotor (14) ist.

27. Antriebsanordnung nach Anspruch 17 oder einem der Ansprüche 18 bis 26 bei Abhängigkeit von Anspruch 17, **dadurch gekennzeichnet, dass** eine Vielzahl angetriebener Räder (12) an jeder Seite des Fahrzeugs (10) mit einem gesonderten Frequenzinverter (16) und Elektromotor (14) für jedes Rad (12) vorgesehen sind.

## Revendications

1. Agencement d'entraînement d'un véhicule sur rails, l'agencement comprenant un moyen d'entraînement (14) permettant d'entraîner, indépendamment, une roue (12) de chaque côté d'un véhicule sur rails, un moyen de détection de l'alignement (18) permettant de déterminer l'alignement de la voie (20) à l'avant du véhicule (10) par rapport à un axe longitudinal du véhicule, et un moyen de commande de la vitesse (24) permettant de commander la vitesse de la roue, de chaque côté du véhicule (10) par rapport à l'autre côté, **caractérisé en ce que** le moyen de commande de la vitesse (24) peut fonctionner en réponse à un signal provenant du moyen de détection de l'alignement (18) afin de commander le moyen d'entraînement (14), ledit moyen d'entraînement (14) appliquant, en réponse à l'alignement déterminé de la voie (20), une première vitesse à l'une desdites roues et une seconde vitesse à l'autre desdites roues, de l'autre côté du véhicule, de telle sorte que chacune desdites deux roues (12) tourne à une vitesse relative requise pour que le véhicule (10) se déplace sans qu'il soit besoin que l'une ou l'autre roue (12) patine.

2. Agencement d'entraînement selon la revendication 1, **caractérisé en ce que** le moyen de commande de la vitesse de la roue comprend un microcontrôleur (24).

3. Agencement d'entraînement selon les revendications 1 ou 2, **caractérisé en ce que** le moyen de détection de l'alignement comprend un détecteur de position (18).

4. Agencement d'entraînement selon la revendication 3, **caractérisé en ce que** le détecteur de position (18) est connecté au microcontrôleur (24).

5. Agencement d'entraînement selon les revendications 3 ou 4, **caractérisé en ce que** le détecteur de position (18) est un détecteur de signal d'onde électromagnétique.

6. Agencement d'entraînement selon la revendication 5, **caractérisé en ce que** le détecteur de signal électromagnétique (18) est un dispositif d'imagerie optique.

7. Agencement d'entraînement selon les revendications 3 ou 4, **caractérisé en ce que** le détecteur de position (18) est un détecteur à infrarouge.

8. Agencement d'entraînement selon les revendications 3 ou 4, **caractérisé en ce que** le détecteur de position (18) est un détecteur de proximité magnétique.

9. Agencement d'entraînement selon les revendications 3 ou 4, **caractérisé en ce que** le détecteur de position (18) comprend un détecteur à ultrasons.

10. Agencement d'entraînement selon l'une quelconque des revendications 3 à 9, **caractérisé en ce qu'**une pluralité de détecteurs de position (18) sont fournis pour fonctionner simultanément.

11. Agencement d'entraînement selon la revendication 10, **caractérisé en ce que** les détecteurs (18) comprennent plus d'un type de détecteur.

12. Agencement d'entraînement selon l'une quelconque des revendications 3 à 11, **caractérisé en ce que** le détecteur de position (18) détecte l'alignement de la voie (20) à une certaine distance définie, à l'avant de la roue (12).

13. Agencement d'entraînement selon la revendication 12, **caractérisé en ce que** la distance est déterminée par le temps nécessaire pour provoquer un changement de la vitesse de la roue, en réponse à une variation détectée de la voie.

14. Agencement d'entraînement selon les revendications 1 ou 2, **caractérisé en ce que** le moyen de détection de l'alignement (18) comprend un appareil de signal de côté de voie, à partir duquel les informations relatives à la voie sont envoyées au microcontrôleur.

15. Agencement d'entraînement selon l'une quelconque des revendications précédentes, **caractérisé en ce que** le moyen de commande de la vitesse de la roue comprend un inverseur de valeur de fréquence (16).

16. Agencement d'entraînement selon la revendication 15, **caractérisé en ce que** la vitesse de la roue (12) est proportionnelle à la fréquence du courant.

17. Agencement d'entraînement selon les revendications 15 ou 16, **caractérisé en ce qu'**un moteur électrique (14) et un inverseur (16) sont fournis pour chaque roue (12).

18. Agencement d'entraînement selon la revendication 17, **caractérisé en ce que** la vitesse de chaque roue (12) est déterminée par la fréquence du courant alternatif fourni à partir de l'inverseur (16) correspondant.

19. Agencement d'entraînement selon les revendications 17 ou 18, **caractérisé en ce qu'**une alimentation de courant triphasé est fournie au moteur (14).

20. Agencement d'entraînement selon l'une quelconque des revendications 17 à 19, **caractérisé en ce qu'**un détecteur de courant est fourni entre l'inverseur et le moteur, afin de surveiller ainsi la puissance de sortie fournie au moteur.

21. Agencement d'entraînement selon l'une quelconque des revendications précédentes, **caractérisé en ce que** le moyen de commande de la vitesse de roue comprend, en outre, un moyen (26) permettant de déterminer l'alignement de chaque roue motrice (12) par rapport à la voie (20).

22. Agencement d'entraînement selon la revendication 21, lorsque celle-ci est dépendante de la revendication 2, ou l'une quelconque des revendications 3 à 20, lorsque celles-ci sont dépendantes de la revendication 2, **caractérisé en ce que** le microcontrôleur (24) est programmé pour compenser tout mauvais alignement d'une roue (12), provoqué par exemple, par des différences des diamètres des roues respectives (12).

23. Agencement d'entraînement selon l'une quelconque des revendications précédentes, **caractérisé en ce que** l'agencement comprend un moyen (28) permettant de maintenir les roues opposées (12) parallèles l'une à l'autre.

24. Agencement d'entraînement selon la revendication 23, **caractérisé en ce que** ledit moyen comprend une transmission (28) qui s'étend entre les roues (12).

25. Agencement d'entraînement selon l'une quelconque des revendications précédentes, **caractérisé en ce que** le moyen d'entraînement comprend un moteur synchrone (14).

26. Agencement d'entraînement selon la revendication 25, **caractérisé en ce que** le moteur synchrone est un moteur synchrone à aimant permanent (14).

27. Agencement d'entraînement selon la revendication 17 ou l'une quelconque des revendications 18 à 26, lorsque celles-ci sont dépendantes de la revendication 17, **caractérisé en ce qu'**une pluralité de roues motrices (12) est fournie de chaque côté du véhicule (10), un inverseur de valeur de fréquence (16) et un moteur électrique (14) séparés étant fournis pour chaque roue (12).
